(19) **Europäisches Patentamt**

**European Patent Office**

**Office européen des brevets**

(11) Veröffentlichungsnummer: **0 327 653 B1**

(12) **EUROPÄISCHE PATENTSCHRIFT**

(45) Veröffentlichungstag der Patentschrift: **17.06.92**

(51) Int. Cl.⁵: **F01N 3/02, B01D 39/06**

(21) Anmeldenummer: **88101794.1**

(22) Anmeldetag: **08.02.88**

(43) Veröffentlichungstag der Anmeldung:
**16.08.89 Patentblatt 89/33**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**DE-A- 3 539 641       DE-U- 8 709 095**
**FR-A- 2 140 584       US-A- 4 106 913**
**US-A- 4 299 600       US-A- 4 331 454**
**US-A- 4 535 589**

(54) **Russfilter.**

(73) Patentinhaber: **Thomas Josef Heimbach**
**GmbH & Co.**
**An Gut Nazareth 73**
**W-5160 Düren-Mariaweiler(DE)**

(72) Erfinder: **Janssen, Eberhard, Dr.**
**Erkensgasse 6**
**W-5160 Düren(DE)**
Erfinder: **Schäfer, Wolfgang**
**Beethovenweg 22**
**W-5160 Düren(DE)**

(74) Vertreter: **Paul, Dieter-Alfred, Dipl.-Ing.**
**Fichtestrasse 18**
**W-4040 Neuss 1(DE)**

Rank Xerox (UK) Business Services

EP 0 327 653 B1

## Beschreibung

Die Erfindung betrifft ein Rußfilter für die Reinigung von rußhaltigen Abgasen, insbesondere von Dieselmotoren, mit einem Gehäuse mit Zu- und Abströmseite sowie mit einem Filtermittel, wobei zu dem Filtermittel eine Vielzahl von Filterkörnern gehören, die jeweils aus einer Vielzahl von Carbidpartikeln aus metallisch oder kovalent gebundenem Carbid bestehen und durch Carbidbrücken desselben Carbidmaterials zusammengehalten sind.

Im Rahmen der Bemühungen um die Reinigung der Abgase von Kraftfahrzeugen ist auch der Dieselmotor ins Gerede gekommen. Dieselmotoren stoßen nämlich Rußpartikeln aus, und zwar hauptsächlich in der Größenordnung von 0,1 tausendstel mm bis 0,3 tausendstel mm. Abgesehen von der hierdurch bewirkten Staubbelastung ist man mittlerweile relativ sicher, daß Dieselrußpartikeln cancerogen sind. Es ist deshalb damit zu rechnen, daß der Rußausstoß von Dieselmotoren in naher Zukunft - ähnlich wie die Schadstoffemissionen bei Otto-Motoren - durch gesetzliche Maßnahmen begrenzt wird. Die Hersteller von Dieselmotoren wie auch die zuliefernden Filterhersteller arbeiten deshalb fieberhaft an einsatzfähigen Lösungen zur Herabsetzung der Rußemissionen.

Ein Entwicklungsziel besteht darin, den Verbrennungsvorgang in Dieselmotoren so zu steuern, daß Ruß in den bisher üblichen Mengen erst gar nicht entsteht. Die Entwicklung ist jedoch noch nicht fortgeschritten, und es ist sehr fraglich, ob auf diese Weise der Rußausstoß wesentlich herabgesetzt werden kann.

Die Bemühungen gehen deshalb zur Zeit vornehmlich in Richtung auf die Entwicklung von geeigneten Filtern zum Abscheiden der Rußpartikeln aus dem Abgas der Dieselmotoren. Einen recht vollständigen Überblick über den derzeitigen Entwicklungsstand bei diesen Filtern gibt der Artikel "Die Wickel-Sache", veröffentlicht in "Verkehrs-Rundschau", Nr. 46 vom 14.Nov. 1987. Im einzelnen werden dabei folgende Filterbauarten untersucht.

Beim keramischen Monolithfilter wird ein Keramikkörper von einer Vielzahl von Längskanälen durchzogen, die abwechselnd vorne bzw. hinten verschlossen sind. Die Abgase strömen durch die poröse Keramikwand, wobei sich der Ruß an den Wänden ablagert. Mit diesem Monolithfilter werden zwar hohe Abscheidegrade erreicht, sie sind jedoch empfindlich gegen Verstopfung, d.h. mit zunehmender Rußsammlung steigt der Abgasgegendruck an und nimmt somit die Motorleistung ab. Der Kraftstoffverbrauch und die gasförmigen Emissionen nehmen gleichzeitig zu. Schließlich besteht die Gefahr einer dauerhaften Verstopfung. Außerdem muß ein solches Monolithfilter relativ groß ausgebildet sein, damit die anfallenden hohen Gasmengen filtriert werden können. Dies bedeutet angesichts der Erschütterungen, denen solche Filter ausgesetzt sind, Bruchgefahr.

Die Daimler-Benz AG befaßt sich deshalb mit der Entwicklung von sogenannten Keramik-Wickelfiltern. Es besteht aus einem Bündel gelochter Stahlrohre, die von dem Abgas durchströmt werden und in mehreren Lagen mit hochtemperaturfestem Keramikgarn umwickelt sind. Gattungsmäßig handelt es sich hier um ein Tiefenfilter, wobei die Rußteilchen an den Härchen des Garns haften bleiben. Hierdurch können hohe Abscheidegrade erzielt werden. Sein Wirkungsgrad, bezogen auf die Partikelnemission, ist jedoch deutlich schlechter. Man ist bemüht, durch zusätzliche Maßnahmen den Wirkungsgrad zu verbessern.

Eine Abwandlung des Wickelfilters stellt das Stahlwollfilter dar. Hier bestehen die Filterrohre aus gepreßter Stahlwolle. Allerdings ist der Abscheidegrad insbesondere in dem Partikelngrößenbereich, der für den Menschen gesundheitsschädlich sein kann, unzureichend.

Die Rußabscheidung kann auch so geschehen, daß der Ruß mittels elektrostatischer Kräfte agglomeriert wird und diese Agglomerate in einen hierfür entwickelten Zyklon geleitet werden, der Rußpartikeln mit Hilfe der Fliehkraft vom Abgasstrom trennt. Der rußbeladene Strom wird als Abgasrückführung in den Motor zurückgeleitet. Dies hat jedoch den Nachteil eines hohen Motorenverschleisses. Zudem existieren bisher noch keine Zyklone in der dafür notwendigen Größenordnung.

Die bisher bekannten Rußfilter geben also noch erhebliche Probleme auf und sind deshalb auch noch nicht einsatzreif. Hinzu kommt das Problem der Reinigung der Filter. Die Entfernung des abgeschiedenen Rußes kann durch dessen Abbrennen erfolgen, wobei sich die Rußpartikeln in gasförmiges Kohlendioxid umwandeln. Voraussetzung hierfür ist allerdings eine Abgastemperatur von mehr als 550°C über einen längeren Zeitraum. Solche Temperaturen werden beispielsweise bei Stadtlinienbussen nie erreicht. Mit Hilfe von zusätzlich angebrachten Dieselbrennern oder elektrischer Beheizung können die Temperaturen im Rußfilter derart angehoben werden, daß der Ruß abbrennt.

Eine andere Möglichkeit besteht darin, eine selbsttätige thermische Entflammung des Rußes mit Hilfe der Zugabe von Oxidationsmitteln zu erreichen. Zusätzlich können auch Katalysatoren auf metallischer Basis zugegeben werden, die der Ansaugluft, dem Kraftstoff oder dem Abgas vor dem Filter beigemischt werden. Das Filter kann jedoch auch mit Katalysatoren sowohl nichtmetallischer als auch metallischer Art beschichtet werden.

Bei der Erhöhung der Abgastemperatur mit Hilfe beispielsweise eines Dieselbrenners muß der Betrieb des Fahrzeuges unterbrochen werden. Es werden deshalb Bauformen mit zwei parallel angeordneten Filtersystemen vorgeschlagen, wobei ein Filter der Abgasreinigung dient, während das jeweils andere Filter durch Rußabbrennung gereinigt wird. Gelöst ist dabei immer noch nicht das Problem der Materialwahl, denn die bei der Rußabbrennung auftretenden Temperaturen überschreiten erheblich die Temperaturen, die für die verwendeten Filtermaterialien zulässig sind.

Zusammenfassend läßt sich feststellen, daß die Filtertypen, die für eine Serienfertigung nach Auffassung der großen Dieselmotor- und Filterfertiger in Frage kommen, wegen prinzipieller Nachteile von einer Serienreife noch weit entfernt sind. Dies gilt sowohl für die Filtereigenschaften selbst wie für die Reinigung der Filter.

Für die verschiedensten Verwendungszwecke, unter anderem auch die Heißgasfiltration in der industriellen Prozeßtechnik, sind Formkörper aus Siliciumcarbid entwickelt worden. In der DE-OS 30 05 587 ist ein Verfahren zur Herstellung solcher Formkörper beschrieben, bei dem als Ausgangsmaterial eine Mischung von körnigem und/oder pulverförmigem Silicium sowie von Kohlenstoffpulver, beispielsweise gemahlenem Koks, Elektrographit, Naturgraphit, Holzkohle, Ruß oder dergleichen, in einem vorbestimmten Mischungsverhältnis verwendet wird. Diese Mischung wird mit einem organischen Bindemittel umhüllt. In einer anschließenden Verfahrensstufe wird dieses Material als Grünkörper geformt und durch Aufheizen bis zu einer Temperatur von $800^0$C bis $1000^0$C verkokt. Zur Umsetzung des Kohlenstoffs und des Siliciums zu Siliciumcarbid wird dann der Formkörper in einer Inertgasatmosphäre auf eine zwischen $1400^\circ$C und $1700^\circ$C liegende Temperatur aufgeheizt. Es entsteht ein Siliciumcarbid-Formkörper hoher Temperatur- und großer Temperaturwechselbeständigkeit. Außerdem zeichnet sich dieser Formkörper durch große Festigkeit und im Vergleich zu Metallen durch eine geringe Dichte sowie eine sehr gute Korrosionsbeständigkeit gegenüber den meisten Substanzen aus.

Die nach diesem Verfahren hergestellten Formkörper haben zwar eine durchgehende Permeabilität, die den Durchtritt eines Mediums zuläßt. Allerdings wäre die spezifische Belastung bei der Verwendung als Abgasfilter zu hoch. Diese Formkörper sind deshalb für Filtrationszwecke, bei denen große spezifische Belastungen auftreten, nicht geeignet.

Das Verfahren ist deshalb weiterentwickelt worden (DE-OS 33 05 529). Bei diesem Verfahren wird aus dem Ausgangsmaterial, nämlich Kohlenstoffpulver oder Kohlenstoffpulver und Silicium- und/oder Siliciumcarbidpulver jeweils zusammen mit einem verkokbaren organischen Binder ein Mischpulver gebildet und anschließend zu einem grünen Vorkörper geformt. Dieser wird dann in grobe Körner zerkleinert, von denen in Abhängigkeit von der vorgesehenen Durchlässigkeit eine im Bereich zwischen 0,2 bis 10 mm liegende Kornfraktion herausgesiebt wird. Das so erhaltene Granulat wird zu einem zweiten grünen Körper geformt, wobei der Preßdruck an die gewünschte Durchlässigkeit des zu bildenden Formkörpers angepaßt wird. Dieser wird dann zwecks Verkokung des Binders auf $600^\circ$C bis $1000^\circ$C erhitzt. Anschließend wird der Formkörper, sofern er aus dem Binder und Kohlenstoffpulver - gegebenenfalls mit einem Zusatz von Siliciumcarbid - besteht, entweder in ein Siliciumbad eingetaucht oder Siliciumdampf ausgesetzt. Wenn neben dem Binder nur Kohlenstoffpulver und Siliciumpulver, gegebenenfalls unter Beimengung von Siliciumcarbid, verwendet worden ist, wird der Formkörper nach der Verkokung auf eine Temperatur von etwa $1400^\circ$C bis $1900^\circ$C aufgeheizt. In beiden Fällen erfolgt eine Umsetzung des Kohlenstoffs und des Siliciums zu Siliciumcarbid. Das Endprodukt besteht somit im wesentlichen aus Siliciumcarbid, wobei zwischen den einzelnen Granulatkörnern Brücken gebildet worden sind, die ebenfalls aus Siliciumcarbid bestehen.

Mit diesem Verfahren sind Filtermittel herstellbar, die bei guter Filterwirksamkeit auch von größeren Gas- oder Flüssigkeitsmengen durchströmt werden können. Nachteilig ist jedoch, daß durch die Zerkleinerung des ersten grünen Formkörpers und das anschließende Sieben nur etwa 10% bis maximal 20% des zerkleinerten Materials für die Bildung des zweiten Grünkörpers übrigbleiben, während der übrige Teil verloren ist und auch nicht wieder verwendet werden kann. Das Verfahren ist also sehr unwirtschaftlich.

Der Einsatzfähigkeit für Heißgasfilter steht zudem entgegen, daß das herausgesiebte Granulat aus splitterartigen Körnern besteht, die nicht nur unterschiedliche Größen haben, sondern auch sehr unregelmäßig geformt sind. Es ist deshalb nicht möglich, daraus einen Formkörper herzustellen, der eine über die Fläche gleichbleibende Permeabilität aufweist. Dies hat zudem zur Folge, daß eine reproduzierbare Herstellung von Filtermitteln, insbesondere bezüglich der Permeabilität, nicht möglich ist.

Auch dieses Verfahren bedurfte somit der Weiterentwicklung. In dem DE-GM 87 09 095.3 ist dieses weiterentwickelte Verfahren beschrieben. Im Gegensatz zu dem in der DE-OS 33 05 529 beschriebenen Verfahren wird bei diesem Verfahren das Granulat zur Herstellung des Filtermittels nicht durch Zerkleinern eines grünen Vorkörpers gebildet, sondern durch eine Aufbaugranulation, d.h. Pelletierung des mit dem verkokbaren Binder versehenen Pulvers aus Kohlenstoff oder aus der Kombination von Kohlenstoff mit dem betreffenden Element, z.B. Silicium, Bor und/oder Titan und/oder dessen Carbid. Es entstehen kugelförmige Körner ausreichender Festigkeit, die nachfolgend als Schüttung formgepreßt werden. Ein weiterer Vorteil besteht darin, daß die Ausbeute des Verfahrens wesentlich höher ist als bei dem vorbekannten Verfahren. Sie beträgt mindestens 50% des eingesetzten Pulvers bei einer Körnung von 1 bis 2,5 mm. Der verbleibende Feinkornanteil kann zudem mehrfach für die Pelletierung eingesetzt werden, wodurch sich die Ausbeute noch erhöhen läßt.

Zwar war es das Ziel, die Kugelform der Pellets bei dem durch dieses Verfahren hergestellten Filtermittel möglichst weitgehend zu erhalten, damit eine über die Fläche gleichmäßige und reproduzierbare Permeabilität entsteht. Es hat sich jedoch herausgestellt, daR das anschließend notwendige Formpressen zur Herstellung des zweiten Grünkörpers zu Abplattungen der Pellets an ihren gegenseitigen Berührungspunkten führt und daß zudem die Brückenbildung zwischen den Pellets im Bereich der Abplattungen so stark ist, daR die Permeabilität immer noch sehr begrenzt ist, wenn auch gegenüber dem Filtermittel nach der DE-OS 33 05 529 wesentlich verbessert. Außerdem verringert sich die wirksame Filterfläche.

Obwohl die vorgenannten Verfahren in ihrer Grundform schon seit langem unter dem Fachbegriff "COAT-MIX" bekannt sind, haben die nach diesem Verfahren hergestellten Filtermittel nur zögernd Eingang in der industriellen Prozeßtechnik gefunden. Als Rußfilter sind sie bisher nicht in Erwägung gezogen worden und wären sie auch wegen der beschränkten Permeabilität nur wenig geeignet.

Ausgehend von dem eingangs genannten Stand der Technik liegt der vorliegenden Erfindung die Aufgabe zugrunde, ein Rußfilter zu schaffen, das sich durch hohe Permeabilität bei gleichzeitig großer Filterwirksamkeit für die Rußpartikeln auszeichnet und dessen Material ohne weiteres eine Rußabbrennung selbst bei hohen Temperaturen aushält.

Diese Aufgabe wird erfindungsgemäß dadurch gelöst, daß das Filtermittel des Rußfilters von einer nicht verpreßten, jedoch im Gehäuse ortsfest gehaltenen Schüttung aus offenporigen Filterkörnern gebildet ist.

Erfindungsgemäß wird hiermit ein Rußfilter bereitgestellt, dessen Filtermittel nicht - wie vorbekannt - aus einem festen Formkörper besteht, sondern aus einer nicht verpreßten Schüttung von ortsfest gehaltenen Filterkörnern. Hierdurch ergeben sich in der Schüttung eine Vielzahl von freien Durchströmkanälen, die für eine hohe Permeabilität sorgen, wie sie für die hier in Rede stehende Anwendung notwendig ist. Die Durchströmkanäle unterliegen jedoch vielfachen Umlenkungen, die das Eindringen bzw. Diffundieren in die porösen und als Tiefenfilter wirkenden Filterkörner begünstigen, so daß sie sich dort ablagern können. Dabei erlaubt die hohe Permeabilität eine vergleichsweise tiefe Schichtung der Schüttung, wodurch die Wahrscheinlichkeit, daß die Rußpartikeln sich in den einzelnen Filterkörnern ablagern, erhöht wird. Es sind also hohe Abscheidegrade bei geringem Strömungwiderstand erreichbar, wobei Verstopfungen praktisch ausgeschlossen sind und die Leistungsverluste und damit die Erhöhung des Kraftstoffverbrauchs bei dem Dieselmotor nur gering sind.

Da das Filtermittel nicht aus einem festen Formkörper sondern aus einer Vielzahl von kleinen Filterkörnern besteht, kann dem Rußfilter im Prinzip jede beliebige Form gegeben werden, die Formvorgabe erfolgt allein durch das Filtergehäuse. Das Filtermittel kann deshalb in seiner Raumform optimal an die Erfordernisse der Rußfiltration und auch an die Platzanforderungen im Fahrzeug angepaßt werden.

Der erfindungsgemäße Rußfilter ist auch besonders einfach in der Handhabung, da sich das Gehäuse auf einfache und schnelle Weise entleeren und wieder füllen läßt.

Da die Filterkörner aus hochtemperaturfestem Carbidmaterial bestehen, dessen zulässige Temperatur weit über 1000°C liegt, kann auch die Reinigung des Rußfilters problemlos durch Abbrennen des Rußes erfolgen. Dabei zeichnen sich die einzelnen Filterkörner durch große Härte und hohe Abriebfestigkeit aus, so daß es praktisch nicht zu einem Verlust von Filtermaterial kommen kann. Da die Stabilität der Filterkörner groß ist, sind auch Brüche von Filterkörnern kaum zu erwarten. Selbst wenn solche Brüche vereinzelt auftreten, wird hierdurch die Funktionsfähigkeit des Rußfilters insgesamt nicht beeinträchtigt; Brüche führen lediglich dazu, daß sich die Zahl der Filterkörner erhöht, während sich ihre Größe verringert.

Im Ergebnis wird erstmals ein Rußfilter zur Verfügung gestellt, das keine Stabilitätsprobleme aufwirft, hohe Abscheidegrade bei großer Permeabilität garantiert und sich zudem durch hohe Hitzebeständigkeit bei geringem Ausdehnungskoeffizienten auszeichnet.

Die Herstellung der einzelnen Filterkörner geschieht zweckmäßigerweise nach dem vorerwähnten "COAT-MIX"-Verfahren, d.h. es wird ein Ausgangspulver aus Kohlenstoff oder aus Kohlenstoff und einem Metall oder Halbmetall und/oder einem Carbid desselben gebildet, das dann in Knetern oder Mischern mit einem verkokbaren Binder versetzt wird. Als Bindemittel eignen sich Pech, Teer, Kunstharz oder dergleichen, insbesondere Phenolformaldehydharz. Die so hergestellten Partikeln werden dann zu den Filterkörnern geformt, beispielsweise durch eine Aufbaugranulation, d.h. Pelletierung in einer Pelletiertrommel oder auf einem Pelletierteller. Die so gebildeten Filterkörner werden durch Aufheizung im Vakuum auf eine Temperatur im Bereich von 600° bis 1000°C verkokt. Anschließend folgt eine Umsetzung in das Carbid bei Temperaturen zwischen 1400°C und 1900°C in einer Inertgasatmosphäre und unter einem Druck von mindestens 1 bar. Die Verfahren sind im einzelnen in der DE-OS 30 05 587, der DE-OS 33 05 529 und dem DE-GM 87 09 095 beschrieben. Wegen ihrer Regelmäßigkeit und Berechenbarkeit sollten die Filterkörner zumindest einen kreisähnlichen bzw. kreisförmigen Querschnitt, vorzugsweise Kugelform bzw. kugelähnliche Form haben. Je nach gewünschter Permeabilität, Tiefe und Abscheidgrad können die Filterkörner eine Durchmesser von 0,1 bis 5 mm haben.

In weiterer Ausgestaltung der Erfindung ist vorgeschlagen, daß der Durchmesser der Filterkörner sich von der Zu- zur Abströmseite hin verkleinert und/oder daß die Porenstruktur der Filterkörner in dieser Richtung feiner wird. Dabei kann die Verkleinerung der Durchmesser bzw. die Verfeinerung der Porenstruktur der Filterkörner stufenförmig erfolgen, so daß sich in Strömungsrichtung hintereinander angeordnete Schichten von Filterkörnern gleichen Durchmessers bzw. gleicher Porenstruktur ergeben. Sie können dabei in hintereinander liegenden Kammern angeordnet werden, die beispielsweise durch Siebböden getrennt sind, wobei in den Kammern jeweils Filterkörner gleichen Durchmessers bzw. gleicher Porenstruktur vorgesehen sind.

Es besteht ferner auch hier die Möglichkeit, das Rußfilter mit die Verbrennung fördernden, katalytisch wirksamen Substanzen auszustatten, beispielsweise indem die Filterkörner mit solchen Substanzen dotiert werden oder spezielle Katalysatorkörner in die Matrix der Schüttung eingelagert werden. Als solche Substanzen kommen z.B. Platin, Palladium, Mangan, Vanadium oder deren Oxide in Frage.

Ferner besteht die Möglichkeit, in dem Rußfilter Glühkörper anzuordnen, die elektrisch erhitzbar sind. Dies können beispielsweise Glühdrähte, Glühröhren oder dergleichen sein, die im Rußfilter Temperaturen erzeugen, bei denen das Abbrennen des Rußes beginnt. Alternativ dazu oder in Kombination damit können auch Einspritzdüsen zum Einspritzen von leicht brennbaren Füssigkeiten und/oder von Oxidationsmitteln, beispielsweise Luft, vorgesehen werden.

Sofern die Filterkörner aus Carbiden mit Halbleiter-oder Leitereigenschaften, wie z. B. Siliciumcarbid, bestehen, ist es vorteilhaft, die Leitereigenschaften dieser Werkstoffe für die elektrische Erhitzung der Filterkörner zu nutzen. Hierzu sollten die Filterkörner so dicht gepackt sein, daß sie sich untereinander berühren, und es sollten Kontakte zur Durchleitung eines elektrischen Stroms vorgesehen sein. Auf diese Weise bildet sich ein genügend hoher elektrischer Widerstand, wodurch eine Aufheizung bis zur Entzündungstemperatur des abgeschiedenen Rußes möglich ist. Die Schüttung kann jedoch auch als Induktionskern herangezogen werden. In diesem Fall wird mittels einer Induktionsspule und hochfrequentem Wechselstrom ein Induktionsstrom in der Schüttung erzeugt, wodurch die Entzündungstemperatur des Rußes und damit dessen Abbrennen erreicht wird.

In weiterer, vorteilhafter Ausgestaltung der Erfindung ist vorgesehen, daß die Gehäusewandung des Rußfilters aus dicht gepreßten, keramischen Carbidpartikeln besteht, die über von demselben Carbidmaterial gebildeten Carbidbrücken miteinander verbunden sind. Die Herstellung kann dabei nach dem in der DE-OS 30 05 587 beschriebenen Verfahren erfolgen, nur daß die Verpressung zum Formkörper, der die Gehäusewandungen bildet, so stark ist, daß die Wandungen gasdicht sind. Vorzugsweise sollte das Carbidmaterial dasselbe sein, aus dem auch die Filterkörner bestehen, damit sich Gehäusewandungen und Filtermittel bei Temperaturänderungen mit gleichem Ausdehnungskoeffizienten verändern.

Gemäß einem weiteren Merkmal der Erfindung ist vorgesehen, daß das Gehäuse zumindest an der Zu- und der Abströmseite Siebböden aufweist. Diese Siebböden bestehen zweckmäßigerweise aus formgepreßtem Carbidgranulat, wobei das Granulat wie auch die Carbidpartikeln, aus denen das Carbidgranulat gebildet ist, über Carbidbrücken desselben Carbidmaterials miteinander verbunden sind. Dabei sollte als Carbidmaterial dasjenige genommen werden, daß auch für die Filterkörner und gegebenenfalls das Filtergehäuse verwendet wird, um auch insoweit gleiche Ausdehnungsverhältnisse bei Temperaturänderungen zu schaffen. Die Herstellung dieser Siebböden geschieht zweckmäßigerweise nach dem in der DE-OS 33 05 529, besser noch nach dem in dem DE-GM 87 09 095 beschriebenen Verfahren. Damit die Permeabilität, der Siebböden an die des Filtermittels selbst angepaßt ist, sollte zumindest der zuströmseitige, gegebenenfalls aber auch der abströmseitige Siebboden ein gegenüber dem Zuström- bzw. Abströmquerschnitt vergrößerte Durchströmfläche aufweisen, so daß der Strömungswiderstand dort geringer ist als in der Schüttung. Diese kann beispielsweise dadurch erreicht werden, daß der Siebboden bzw. die Siebböden in die Schüttung der Filterkörner hineinragende Fingerrohre aufweist oder aus diesen besteht. Die Enden der Fingerrohre können dabei gasdicht ausgebildet sein, so daß die Durchströmung allein über die Seitenwandungen der Fingerrohre erfolgt.

In weiterer Ausgestaltung der Erfindung ist vorgesehen, daß das Gehäuse mit der Schüttung als auswechselbare Patrone ausgebildet ist. Diese Patrone kann beispielsweise in einem weiteren Gehäuse untergebracht sien, das mit einer Schließeinrichtung zum leichten Auswechseln der Patrone versehen sein kann. Die Patrone selbst sollte ebenfalls leicht öffenbar sein, damit die Filterkörner, wenn sie mit nicht brennbaren Partikeln, wie beispielsweise Rost, Staub, Zunder oder Schwermetallen kontaminiert sind, herausgenommen und regeneriert werden können. Auf Grund der Tatsache, daß die Filterkörner vollständig aus einem Carbid bestehen, ist eine vollständige chemische oder physikalische Regenerierung möglich, so daß sie anschließend wieder verwendet werden können.

In der Zeichnung ist die Erfindung an Hand von Ausführungsbeispielen näher veranschaulicht. Es zeigen:

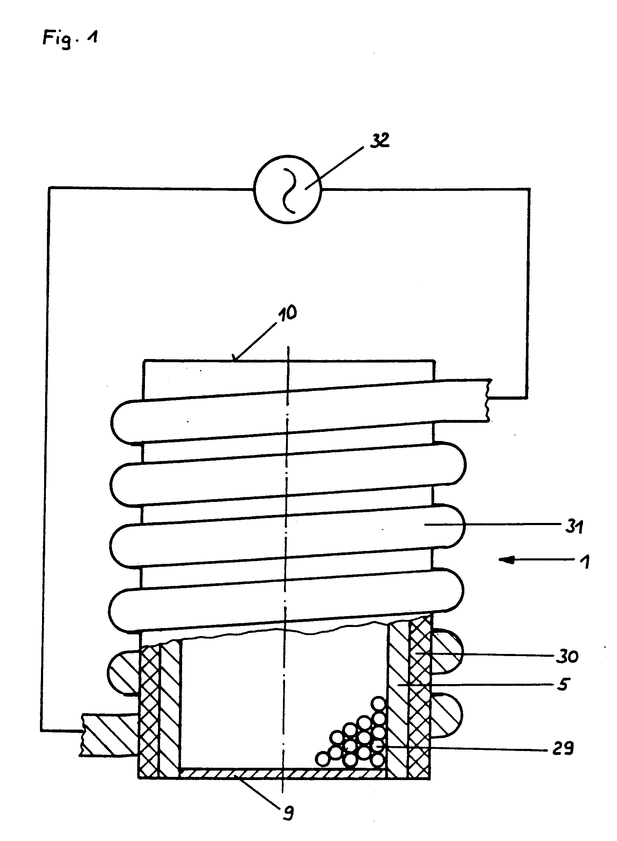

Figur 1    ein Rußfilter im Längsschnitt;

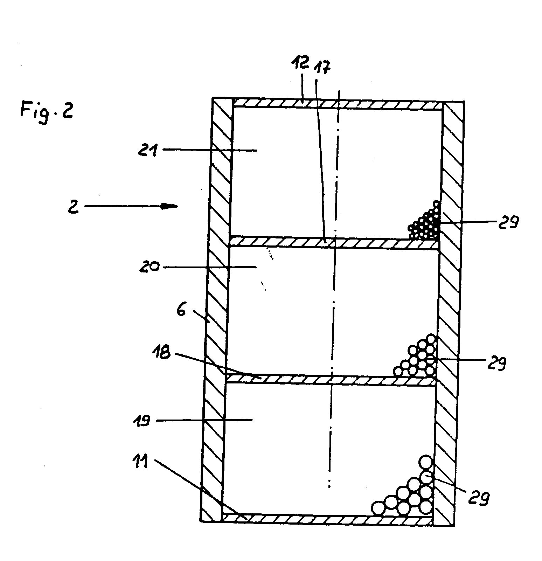

Figur 2    ein anderes Rußfilter im Querschnitt mit kammerartiger Unterteilung;

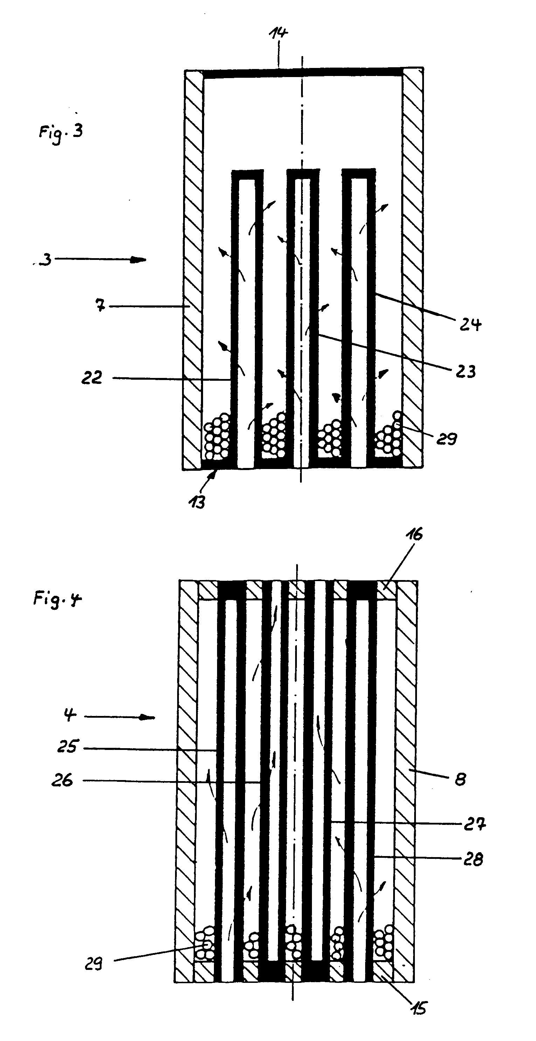

Figur 3    ein anderes Rußfilter im Querschnitt mit anströmseitigen Fingerrohren und

Figur 4    ein weiteres Rußfilter im Querschnitt mit an- und abströmseitigen Fingerrohren.

Die in den Figuren (1) bis (4) dargestellten Rußfilter (1, 2, 3, 4) haben gemeinsam jeweils einen zylinderförmigen Gehäusemantel (5, 6, 7, 8). Die Enden der Gehäusemäntel (5, 6, 7, 8) sind jeweils durch Siebböden (9, 10, 11, 12, 13, 14, 15, 16) abgeschlossen. Die Zuströmseite befindet sich jeweils unten und die Abströmseite jeweils oben.

Bei den in den Figuren (1) und (2) dargestellten Ausführungsbeispielen sind die Siebböden (9, 10, 11, 12) als flache, gasdurchlässige Scheiben ausgebildet. Bei dem Ausführungsbeispiel gemäß Figur (2) ist der zwischen den beiden außenliegenden Siebböden eingeschlossene Hohlraum durch zwei weitere, gasdurchlässige Siebböden (17, 18) aufgeteilt, so daß innerhalb dieses Rußfilters (2) drei gleichgroße Filterkammern (19, 20, 21) entstehen.

Der in Figur (3) dargestellte Rußfilter (3) weist abströmseitig ebenfalls einen scheibenförmig ausgebildeten Siebboden (14) auf. Zuströmseitig ist der Siebboden (13) mit fünf Fingerrohren ausgestattet, von denen in der Querschnittsdarstellung drei Fingerrohre (22, 23, 24) zu sehen sind. Die beiden übrigen Fingerrohre liegen auf dem Radius der beiden äußeren Fingerrohre (22, 24), jeweils um 90° versetzt. Die Fingerrohre (22, 23, 24) erstrecken sich zu etwa drei Viertel der Länge des Rußfilters (3) in dessen Innenraum hinein, und zwar in Durchströmrichtung. Hierdurch entsteht eine wesentlich vergrößerte Durchströmfläche, über die das zuströmende Abgas in den Innenraum des Rußfilters (3) strömen kann, angedeutet durch die Pfeile.

Bei dem in Figur (4) dargestellten Ausführungsbeispiel sind die Siebböden (15, 16) identisch ausgebildet und gegeneinander um 15° verdreht eingesetzt. Jeder der Siebböden (15, 16) weist insgesamt acht Fingerrohre auf, wobei in dieser Schnittdarstellung von jedem Siebboden (15, 16) nur jeweils zwei Fingerrohre (25, 26) bzw. (27, 28) zu sehen sind. Die Fingerrohre (25, 26) bzw. (27, 28) erstrecken sich jeweils über die gesamte Länge des Rußfilters (4) bis in den jeweils gegenüberliegenden Siebboden (15, 16) hinein. An ihren Enden sind sie dicht augebildet, während ihre Rohrmäntel porös sind, so daß das zuströmende Abgas in den Innenraum des Rußfilters (4) einströmen und aus diesem über die Rohrmäntel des abströmseitigen Siebbodens (16) wieder herausströmen kann, wie durch die Pfeile angedeutet ist.

Die Innenräume der Rußfilter (1, 2, 3, 4) bzw. deren Filterkammern (19, 20, 21) sind mit kugelförmigen Filterkörnern - beispielhaft mit (29) bezeichnet-angefüllt, wobei jeweils nur ein Teil der Filterkörner (29) dargestellt sind. Die Filterkörner (29) füllen die Innenräume derart aus, daß sie sich praktisch nicht bewegen können, also ortsfest gehalten sind. Die Filterkörner (29) sind offenporig ausgebildet, so daß sie zur Abscheidung von Rußteilchen aus dem Dieselabgas als Tiefenfilter wirken. Zwischen den einzelnen Filterkörnern (29) ergeben sich Durchströmkanäle mit vielfachen Umlenkungen, die für eine hohe Permeabilität bei großen Abscheidegraden sorgen.

Zur Materialwahl der einzelnen Teile der Rußfilter (1, 2, 3, 4) und deren Herstellung ist folgendes zu sagen.

Bei den in den Figuren (1) und (2) dargestellten Beispielen sind die Siebböden (9, 10) bzw. (11, 12, 17, 18) aus hochdurchlässigem Material hergestellt oder als Gitter oder Lochplatten ausgebildet. Die übrigen Teile der Rußfilter (1, 2) sowie die Rußfilter (3, 4) als Ganzes bestehen aus Siliciumcarbid. Die Herstellung dieser Teile geschieht wie folgt.

Grundsätzlich wird zunächst ein Ausgangspulver aus Kohlenstoff oder aus Kohlentoff und Silicium und/oder Siliciumcarbid gebildet, das dann in Knetern oder Mischern mit einem verkokbaren Binder versetzt wird. Dabei werden die einzelnen Pulverpartikeln von dem Binder umhüllt. Diese Umhüllung kann auch dadurch geschehen, daß das Pulver einer Bindemittellösung zugegeben wird, in der die Partikeln aufgeschlämmt und im Anschluß daran die Aufschlämmung mittels einer Düse in eine zur Abscheidung des Bindemittels dienenden Flüssigkeit eingegeben wird. Dabei werden die Partikeln mit dem Bindemittel gleichmäßig überzogen.

In einer anschließenden Verfahrensstufe werden die Partikeln durch Filtrieren oder Dekantieren von der Abscheidungsflüssigkeit abgetrennt und getrocknet.

Der für das Pulver verwendete Kohlenstoff kann beispielsweise gemahlener Koks, Elektrographit, Naturgraphit, Holzkohle, Ruß oder dergleichen sein. Für das Bindemittel eignen sich Pech, Teer, Kunstharz oder dergleichen, insbesondere Phenolformaldehydharz.

Für die Herstellung der Gehäusemäntel (5, 6, 7, 8) werden die so hergestellten Partikeln in einer Form isostatisch verpreßt, und zwar mit einem derartigen Preßdruck, daß sich ein gasdichter Formkörper ergibt, dessen Form der der Gehäusemäntel (5, 6, 7, 8) entspricht. Bei dem Rußfilter (4) gemäß Figur (4) gehören hierzu auch die Teile der Siebböden (15, 16), die nicht zu den Fingerrohren (25, 26, 27, 28) gehören.

Für die Herstellung der Siebböden (13, 14) gemäß Figur (3) und den zughörigen Fingerrohren (22, 23, 24) und der Fingerrohre (25, 26, 27, 28) bei dem Rußfilter (4) nach Figur (4) sowie für die Herstellung der Filterkörner (29) werden bindemittelüberzogene Partikeln verwendet, die in gleicher Weise hergestellt worden sind wie die Gehäusemäntel (5, 6, 7, 8). In diesem Fall werden die Partikeln jedoch nicht zu entsprechenden Formkörpern verpreßt, sondern einer Aufbaugranulation, d.h. Pelletierung beispielsweise in einer Pelletiertrommel oder auf einem Pelletierteller, unterworfen. Durch Rollagglomeration entstehen somit Körner mit dem jeweils gewünschten Durchmesser. Was die Filterkörner (29) angeht, so haben sie nach der Aufbaugranulation schon den endgültigen Durchmesser. Bei dem Ausführungsbeispiel gemäß Figur (2) nimmt dieser Durchmesser von Filterkammer (19, 20, 21) zu Filterkammer (19, 20, 21) in Durchströmrichtung, also von unten nach oben hin, stufenweise ab. Auch die Porenstruktur der Filterkörner (29) wird mit abnehmendem Durchmesser stufenweise feiner.

Die für die Herstellung der Siebböden (13, 14) und der Fingerrohre (25, 26, 27, 28) vorgesehenen Pellets werden in eine der endgültigen Formgebung entsprechende Form gegeben und dort isostatisch verpreßt, so daß eine gleichmäßige Verdichtung der Pellets erzielt wird und handhabbare Formkörper entstehen. Aufgrund der vorherigen Kugelform und des gewählten Durchmessers der Pellets bilden sich zwischen den Pellets Durchströmungskanäle aus. Die Pellets selbst sind nicht filterwirksam gestaltet. Dadurch wird eine Rußabscheidung an den Eintrittskanälen vermieden. Die natürlichen Durchströmungskanäle können durch zusätzlich gebohrte Kanäle ergänzt werden.

Die Formkörper für die Gehäusemäntel (5, 6, 7, 8) und für die Filterböden (13, 14) und die Fingerrohre (25, 26, 27, 28) sowie die Filterkörner (29) werden anschließend im Vakuum aufgeheizt, und zwar auf eine Temperatur im Bereich von 600°C bis 1000°C. Dies bewirkt eine Verkokung des Bindemittels. Anschließend wird eine Umsetzung zu Siliciumcarbid vorgenommen, und zwar bei Temperaturen zwischen 1400°C und 1900°C in einer Inertgasatmosphäre und bei einem Druck von mindestens 1 bar. Soweit das Ausgangsmaterial kein Siliciumpulver enthielt, werden die Formkörper bzw. die Filterkörner (29) in ein Siliciumbad eingetaucht oder Siliciumdampf ausgesetzt. Dieses Silicium verbindet sich mit dem Kohlenstoff des Binderkoks und dem Kohlenstoffpulver zu Siliciumcarbid. Enthielt das Augangsmaterial neben dem Kohlenstoffpulver auch Siliciumpulver und gegebenenfalls Siliciumcarbidpulver, so reicht eine schnelle Erhitzung in dem vorgenannten Temperaturbereich aus, um die Umsetzung des Kohlenstoffs aus dem Binderkoks und dem Kohlenstoffpulver mit dem Siliciumpulver zu Siliciumcarbid zu bewirken. Dabei wird eine feste Bindung der einzelnen SiC-Partikeln über SiC-Brücken erzielt. Soweit zuvor kugelförmige Pellets zu Formkörpern verpreßt wurden - zwecks Herstellung der Siebböden (13, 14) und der Fingerrohre (25, 26, 27, 28) -, entstehen auch zwischen den Pellets SiC-Brücken, die den Formkörpern hohe Festigkeit geben.

Statt des Siliciums können auch andere Elemente, die sich in der vorgenannten Weise verarbeiten lassen und eine hohe Temperaturfestigkeit haben, eingesetzt werden, beispielsweise Bor und/oder Titan.

Der Gehäusemantel (5) des in Figur (1) dargestellten Rußfilters (1) ist von einem Isoliermantel (30) und dieser von einer Induktionsspule (31) umgeben. Die Induktionsspule (31) steht mit einer hochfrequenten Wechselspannungsquelle (32) in Verbindung. Da die Filterkörner (29) aus einem halbleitenden Carbid bestehen, nämlich Siliciumcarbid, bilden sie in dieser Anordnung einen Induktionskern. Bei Beaufschlagung der Induktionsspule (31) mit hochfrequentem Wechselstrom werden die Filterkörner (29) auf eine solche Temperatur erhitzt, daß Rußpartikeln, die sich insbesondere auf und in den Filterkörnern (29) abgesetzt haben, abbrennen.

Diese Anordnung kann selbstverständlich auch bei den Ausführungsformen gemäß den Figuren (2) bis (4) vorgenommen werden.

Alternativ oder sogar in Kombination dazu besteht die Möglichkeit, die aus Siliciumcarbid bestehenden Teile der Rußfilter (1, 2, 3, 4) an eine elektrische Stromquelle anzuschließen. Dabei wird die Halbleitereigenschaft des SiC bei erhöhten Temperaturen, wie sie im Betrieb von Dieselmotoren auftreten, ausgenutzt. Der elektrische Strom erhitzt dann die Gehäusemäntel (5, 6, 7, 8), die Filterkörner (29), die Siebböden (13, 14) und die Fingerrohre (22, 23, 24, 25, 26, 27, 28) auf eine Temperatur von 700° C und darüber, bei der der Ruß abbrennt. Selbstverständlich besteht auch die Möglichkeit, eine Erhitzung der Rußfilter (1, 2, 3, 4) mittels separater Heizwendeln bzw. Heizkörper zu erzielen. Alternativ dazu oder in Kombination damit können in die Rußfilter (1, 2, 3, 4) durch entsprechende Einspritzvorrichtungen Dieselkraftstoff oder andere, verbrennungsfördernde Substanzen eingespritzt werden, wodurch ebenfalls ein Abbrennen des Rußes bewirkt werden kann. Schließlich besteht die Möglichkeit, in die Rußfilter (1, 2, 3, 4) verbrennungs- bzw. oxidationsfördernde Katalysatoren einzubauen bzw. Teile der Rußfilter (1, 2, 3, 4) mit katalytisch wirkenden Überzügen zu versehen.

**Patentansprüche**

1. Rußfilter für die Reinigung von rußhaltigen Abgasen insbesondere von Dieselmotoren, mit einem Gehäuse mit Zu- und Abströmseite sowie mit einem Filtermittel, wobei zu dem Filtermittel eine Vielzahl von Filterkörnern (29) gehören, die jeweils aus einer Vielzahl von Carbidpartikeln aus metallisch oder kovalent gebundenem Carbid bestehen und durch Carbidbrücken desselben Carbidmaterials zusammengehalten sind,
dadurch gekennzeichnet, daß das Filtermittel von einer nicht verpreßten, jedoch im Gehäuse (5, 6, 7, 8) ortsfest gehaltenen Schüttung aus offenporigen Filterkörnern (29) gebildet ist.

2. Rußfilter nach Anspruch 1,
dadurch gekennzeichnet, daß die Filterkörner (29) Kugelform haben.

3. Rußfilter nach Anspruch 1 oder 2,
dadurch gekennzeichnet, daß der Durchmesser der Filterkörner (29) sich von der Zu- zur Abströmseite hin verkleinert.

4. Rußfilter nach Anspruch 1 bis 3,
dadurch gekennzeichnet, daß die Porenstruktur der Filterkörner (29) von der Zu- zur Abströmseite hin feiner wird.

5. Rußfilter nach einem der Ansprüche 1 bis 4,
dadurch gekennzeichnet, daß die Filterkörner (29) in in Strömungsrichtung hintereinanderliegenden Kammern (19, 20, 21) angeordnet sind.

6. Rußfilter nach einem der Ansprüche 1 bis 5,
dadurch gekennzeichnet, daß das Rußfilter (1, 2, 3, 4) die Verbrennung fördernde, katalytisch wirksame Substanzen enthält.

7. Rußfilter nach einem der Ansprüche 1 bis 6,
dadurch gekennzeichnet, daß in dem Rußfilter (1, 2, 3, 4 Glühkörper angeordnet sind, die elektrisch erhitzbar sind.

8. Rußfilter nach einem der Ansprüche 1 bis 7,
dadurch gekennzeichnet, daß Einspritzdüsen zum Einspritzen von leicht brennbaren Flüssigkeiten und/oder Oxidationsmitteln vorgesehen sind.

9. Rußfilter nach einem der Ansprüche 1 bis 8,
dadurch gekennzeichnet, daß die Filterkörner (29) aus Carbiden mit Leiter- oder Halbleitereigenschaften gebildet und so dicht gepackt sind, daß sie sich untereinander berühren und daß Kontakte zur Durchleitung eines elektrischen Stroms vorgesehen sind.

10. Rußfilter nach einem der Ansprüche 1 bis 9,
dadurch gekennzeichnet, daß das Rußfilter (1, 2, 3, 4) eine Induktionsspule (31) für die Aufheizung zumindest der Filterkörner (29) aufweist, die mit einer hochfrequenten Wechselspannungsquelle (32) verbunden ist.

11. Rußfilter nach einem der Ansprüche 1 bis 10,
dadurch gekennzeichnet, daß die Gehäusewandungen 5, 6, 7, 8) des Rußfilters (1, 2, 3, 4) aus dicht gepreßten keramischen Carbidpartikeln bestehen, deren Zusammenhalt durch Carbidbrücken desselben Carbidmaterials gebildet ist.

12. Rußfilter nach einem der Ansprüche 1 bis 11,
dadurch gekennzeichnet, daß das Gehäuse zumindest an der Zu- und Abströmseite Siebböden (12, 13, 14, 15, 16) aufweist, die aus formgepreßtem Carbidgranulat bestehen, wobei das Granulat wie auch die Carbidpartikel, aus denen das Carbidgranulat gebildet ist, über Carbidbrücken desselben Carbidmaterials miteinander verbunden sind.

13. Rußfilter nach Anspruch 12,
dadurch gekennzeichnet, daß zumindest der zuströmseitige, gegebenenfalls aber auch der abströmseitige Siebboden (13, 15, 16) eine gegenüber dem Zuström- bzw. Abströmquerschnitt vergrößerte Durchströmfläche aufweist bzw. aufweisen.

14. Rußfilter nach Anspruch 13,
dadurch gekennzeichnet, daß der Siebboden bzw. die Siebböden (13, 15, 16) in die Schüttung hineinragende Fingerrohre (22, 23, 24, 25, 26, 27, 28) aufweist bzw. aufweisen oder aus diesen besteht bzw. bestehen.

**15.** Rußfilter nach Anspruch 14,
dadurch gekennzeichnet, daß die Enden der Fingerrohre (25, 26, 27, 28) gasdicht ausgebildet sind.

**16.** Rußfilter nach einem der Ansprüche 1 bis 15, dadurch gekennzeichnet, daß das Gehäuse (5, 6, 7, 8) mit der Schüttung als auswechselbare Patrone ausgebildet ist.

**Claims**

**1.** Soot filter for cleaning soot-containing exhaust gases, in particular of diesel engines, comprising a housing having inflow and outflow side and having a filtering means, the filtering means including a multiplicity of filter granules (29) which are each composed of a multiplicity of carbide particles made of metallically or covalently bound carbide and are held together by carbide bridges of the same carbide material, characterised in that the filtering means is formed by a bed made of open-pored filter granules (29), which bed is not compacted but is kept fixed in position in the housing (5, 6, 7, 8).

**2.** Soot filter according to Claim 1, characterised in that the filter granules (29) are spherical.

**3.** Soot filter according to Claim 1 or 2, characterised in that the diameter of the filter granules (29) decreases from the inflow to the outflow side.

**4.** Soot filter according to Claim 1 to 3, characterised in that the pore structure of the filter granules (29) becomes finer from the inflow to the outflow side.

**5.** Soot filter according to one of Claims 1 to 4, characterised in that the filter granules (29) are disposed in chambers (19, 20, 21) situated one behind the other in the flow direction.

**6.** Soot filter according to one of Claims 1 to 5, characterised in that the soot filter (1, 2, 3, 4) contains the combustion-promoting, catalytically active substances.

**7.** Soot filter according to one of Claims 1 to 6, characterised in that incandescent bodies which can be electrically heated are disposed in the soot filter (1, 2, 3, 4).

**8.** Soot filter according to one of Claims 1 to 7, characterised in that injection nozzles for injecting readily combustible liquids and/or oxidising agents are provided.

**9.** Soot filter according to one of Claims 1 to 8, characterised in that the filter granules (29) are formed of carbides having conductor or semiconductor properties and are so densely packed that they touch one another, and in that contacts for passing an electric current are provided.

**10.** Soot filter according to one of Claims 1 to 9, characterised in that the soot filter (1, 2, 3, 4) comprises an induction coil (31) for heating at least the filter granules (29), which induction coil (31) is connected to a high-frequency alternating-current source (32).

**11.** Soot filter according to one of Claims 1 to 10, characterised in that the housing walls (5, 6, 7, 8) of the soot filter (1, 2, 3, 4) are composed of densely compressed ceramic carbide particles whose cohesion is formed by carbide bridges of the same carbide material.

**12.** Soot filter according to one of Claims 1 to 11, characterised in that the housing comprises, at least on the inflow and outflow side, sieveplates (12, 13, 14, 15, 16) which are composed of compression-moulded granular carbide material, the granules, like the carbide particles from which the granular carbide material is formed, being joined to one another by means of carbide bridges of the same carbide material.

**13.** Soot filter according to Claim 12, characterised in that at least the inflow-side sieveplate, but possibly also the outflow-side sieveplate (13, 15, 16) has or have an increased flow-passage area compared with the inflow or outflow cross section.

**14.** Soot filter according to Claim 13, characterised in that the sieveplate or the sieveplates (13, 15, 16) has or have finger-like tubes (22, 23, 24, 25, 26, 27, 28) projecting into the bed or is or are composed of said finger-like tubes (22, 23, 24, 25, 26, 27, 28).

**15.** Soot filter according to Claim 14, characterised in that the ends of the finger-like tubes (25, 26, 27, 28) are of gastight construction.

**16.** Soot filter according to one of Claims 1 to 15, characterised in that the housing (5, 6, 7, 8) containing the bed is designed as a replaceable cartridge.

## Revendications

1. Filtre à suie pour l'épuration de gaz d'échappement contenant de la suie et provenant en particulier de moteurs Diesel, filtre comprenant une enveloppe qui présente un côté d'entrée et un côté de sortie de l'écoulement, et comprenant aussi un moyen de filtrage, cependant que le moyen de filtrage comprend une pluralité de grains de filtrage (29) qui se composent chacun d'une pluralité de particules de carbure constituées par un carbure métallique ou à liaison covalente et qui sont rendus cohérents par des ponts en carbure du même matériau en carbure, caractérisé par le fait que le moyen de filtrage est formé par une charge en vrac de grains de filtrage (29) à pores ouverts qui n'est pas comprimée, mais qui est maintenue fixe dans l'enveloppe (5, 6, 7, 8).

2. Filtre à suie selon la revendication 1, caractérisé par le fait que les grains de filtrage (29) présentent une forme sphérique.

3. Filtre à suie selon la revendication 1 ou 2, caractérisé par le fait que le diamètre des grains de filtrage (29) diminue depuis le côté d'entrée de l'écoulement dans la direction de son côté de sortie.

4. Filtre à suie selon l'une des revendications 1 à 3, caractérisé par le fait que la structure des pores des grains de filtrage (29) devient plus fine depuis le côté d'entrée de l'écoulement dans la direction de son côté de sortie.

5. Filtre à suie selon l'une des revendications 1 à 4, caractérisé par le fait que les grains de filtrage (29) sont disposés dans des chambres (19, 20, 21) qui sont situées les unes derrière les autres dans la direction de l'écoulement.

6. Filtre à suie selon l'une des revendications 1 à 5, caractérisé par le fait que le filtre à suie (1, 2, 3, 4) contient des substances à effet catalytique qui favorisent la combustion.

7. Filtre à suie selon l'une des revendications 1 à 6, caractérisé par le fait que des corps incandescents qui peuvent être chauffés électriquement sont disposés dans le filtre à suie (1, 2, 3, 4).

8. Filtre à suie selon l'une des revendications 1 à 7, caractérisé par le fait qu'il est prévu des buses d'injection pour injecter des liquides facilement combustibles et/ou des moyens d'oxydation.

9. Filtre à suie selon l'une des revendications 1 à 8, caractérisé par le fait que les grains de filtrage (29) sont constitués par des carbures présentant des propriétés de conductibilité ou de semi-conductibilité, et qu'ils sont enfermés de façon assez compacte pour qu'ils soient en contact entre eux, et par le fait qu'il est prévu des contacts pour les faire traverser par un courant électrique.

10. Filtre à suie selon l'une des revendications 1 à 9, caractérisé par le fait que le filtre à suie (1, 2, 3, 4) comporte une bobine d'induction (31) qui est destinée à chauffer au moins les grains de filtrage (29) et qui est reliée à une source de tension alternative à haute fréquence (32).

11. Filtre à suie selon l'une des revendications 1 à 10, caractérisé par le fait que les parois de l'enveloppe (5, 6, 7, 8) du filtre à suie (1, 2, 3, sont constituées par des particules de carbure céramiques serrées de manière compacte dont la cohésion est assurée par des ponts en carbure du même matériau en carbure.

12. Filtre à suie selon l'une des revendications 1 à 11, caractérisé par le fait que l'enveloppe comporte, au moins du côté de l'entrée de l'écoulement et du côté de sa sortie, des fonds perforés (12, 13, 14, 15, 16) qui sont constitués par des granules de carbure moulés, les granules, tout comme les particules de carbure qui constituent les granules de carbure, étant reliés entre eux par des ponts en carbure du même matériau en carbure.

13. Filtre à suie selon la revendication 12, caractérisé par le fait qu'au moins le fond perforé (13, 15) situé du côté de l'entrée de l'écoulement, mais aussi, le cas échéant, celui (16) qui est situé du côté de la sortie de l'écoulement, présente ou présentent, respectivement, une surface de passage de l'écoulement qui est agrandie par rapport à la section transversale du côté de l'entrée de l'écoulement ou du côté de sa sortie, respectivement.

14. Filtre à suie selon la revendication 13, caractérisé par le fait que le fond perforé ou les fonds perforés (13, 15, 16) comporte ou comportent, respectivement, des tubes en forme de doigts (22, 23, 24, 25, 26, 2 26) qui pénètrent dans la charge en vrac, ou qu'il est constitué par ceux-ci ou qu'ils le sont, respectivement.

15. Filtre à suie selon la revendication 14, caractérisé par le fait que les extrémités des tubes en forme de doigts (25, 26, 27, 26) sont réalisées de manière étanche aux gaz.

16. Filtre à suie selon l'une des revendications 1 à 15, caractérisé par le fait que l'enveloppe (5, 6, 7, 8) est réalisée avec la charge en vrac sous la forme d'une cartouche interchangeable.

Fig. 1

Fig. 2

Fig. 3

Fig. 4